# EUROPÄISCHE PATENTSCHRIFT

(11) **EP 3 294 100 B1**
(45) Veröffentlichungstag und Bekanntmachung des Hinweises auf die Patenterteilung: **20.03.2019**
(21) Anmeldenummer: 16759688.1
(22) Anmeldetag: 04.08.2016
(51) Int. Cl.: A47J 31/46, A47J 31/52, A47J 31/56

(54) **VORRICHTUNG ZUR BEREITUNG EINES HEISSGETRÄNKES UND VERWENDUNG EINER SOLCHEN**
DEVICE FOR PREPARING A HOT BEVERAGE AND USE THEREOF
DISPOSITIF DE PRÉPARATION D'UNE BOISSON CHAUDE ET UTILISATION DE CELUI-CI

(30) Priorität: 19.08.2015 DE 102015113752
(43) Veröffentlichungstag der Anmeldung: 21.03.2018
(73) Patentinhaber: Eugster/Frismag AG, 8580 Amriswil (CH)
(72) Erfinder: Zwahlen, Christoph, 8590 Romanshorn (CH)
(74) Vertreter: Patentanwälte Behrmann Wagner PartG mbB
(86) Internationale Anmeldenummer: PCT/EP2016/068697
(87) Internationale Veröffentlichungsnummer: WO 2017/029127

(56) Entgegenhaltungen:
- EP-A1- 2 027 798
- EP-A1- 2 745 753
- WO-A1-2014/114935

## Beschreibung

Die vorliegende Erfindung betrifft eine Vorrichtung zur Bereitung eines Heißgetränks nach dem Oberbegriff des Hauptanspruchs. Ferner betrifft die vorliegende Erfindung eine Verwendung einer derartigen Bereitungsvorrichtung.

Aus dem Stand der Technik sind in Form gängiger und marktüblicher Portionskaffeemaschinen gattungsbildende Bereitungsvorrichtungen allgemein bekannt; der Getränkerohstoff, bevorzugt und geeignet als kapselartige Einzelportionsverpackung vorgesehen, wird zu diesem Zweck in eine ansonsten bekannte Brüheinheit des Gehäuses eingeführt und mit erwärmtem Wasser mit einem Druck zwischen ca. 10bar und 16bar durchströmt, wodurch dann ein Heißgetränk, hier Kaffee, im Kontakt mit dem Getränkerohstoff bereitet und in ansonsten bekannter Weise über einen Auslass in einen zum Genuss vorgesehenen Behälter ausgetragen werden kann.

Die zum Erwärmen des - aus einem gehäuseinternen Tank, alternativ direkt über einen Frischwasseranschluss des Gehäuses herangeführten - Wassers vorgesehene Erwärmungsvorrichtung ist üblicherweise als Thermoblockheizung realisiert. Hier wird das Wasser beim - pumpengetriebenen - Transport durch einen Heizkörper elektrisch beheizt, wobei die Anordnung blockartig ausgestaltet ist.

Der Erwärmungsvorrichtung zugeordnete Regelmittel, insbesondere in Form einer ein Temperatur-Sollwertsignal verarbeitenden elektronischen Regelschaltung, sind vorgesehen, um das aus der Erwärmungsvorrichtung austretende Heißwasser auf einen für die Brüheinheit vorgesehenen bzw. geeigneten Temperaturwert zu regeln. Insbesondere vor dem Hintergrund einer Empfindlichkeit des Getränkerohstoffs für Abweichungen von dem Temperatursollwert kommt einer Beherrschung dieser Temperaturregelung Bedeutung zu. In ansonsten bekannter Weise erfolgt die Temperaturdetektion der Erwärmungsvorrichtung unter Nutzung eines temperaturveränderlichen elektrischen Widerstands.

Bei als aus dem Stand der Technik bekannt vorauszusetzenden Heißgetränk-Bereitungsvorrichtungen ist insbesondere der Einschalt-, Anfahr- bzw. Aktivierungsbetrieb zur Herstellung einer Portion des Heißgetränks kritisch. So wird nämlich, üblicherweise als Reaktion auf eine manuelle Betätigung geeigneter Bedienelemente am Gehäuse, etwa Auswahl des gewünschten Heißgetränks und Start der Bereitung, eine Aktivierung der diskutierten Pumpenmittel sowie der Erwärmungsvorrichtung, üblicherweise unter Volllast, vorgenommen, damit mit möglichst wenig Zeitverzug das Heißgetränk aus den Auslassmitteln austritt. Gerade jedoch eine Aktivierung der Pumpenmittel in einen Volllast-Pumpenbetrieb bei unbeheizter oder signifikant gegenüber dem Temperatur-Sollwert abgekühlter Erwärmungsvorrichtung führt zu dem nachteiligen Effekt, dass der durch den Pumpenbetrieb bewirkte massive Kaltwassereintritt in die Erwärmungsvorrichtung (typischerweise den Thermoblock) eine signifikante Regelreaktion der Regelmittel auslöst, mit der nachteiligen Konsequenz, dass mindestens ein Überschwingvorgang der Regelung beim initialen Betrieb der Erwärmungsvorrichtung stattfindet. Nachteilige Konsequenz daraus ist, dass dieses durch die Regelmittel bewirkte (Temperatur-)Überschwingen eine - temporäre - Heizleistungsansteuerung und damit Wassererwärmung bewirkt, die den Temperatur-Sollwert signifikant übersteigt. Gerade jedoch etwa im Fall von temperatursensiblem Kaffeepulver als Getränkerohstoff in der Brüheinheit (bzw. in der in der Brüheinheit vorgesehenen Portionsverpackung) zeigt dies dann unerwünschte Effekte im erzeugten und ausgetragenen Heißgetränk: So führt etwa die beschriebene, temporäre Über-Beheizung einerseits zu einer problematischen Auslaugung bzw. Behandlung des Getränkerohstoffs, etwa im Hinblick auf ein unerwünschtes Ausbringen von Fremdstoffen, welche typischerweise erst oberhalb einer Temperaturschwelle gelöst werden. Andererseits führt die im Rahmen des vorliegenden Erfindungskontexts nachteilige Über-Beheizung zu einer visuell sichtbaren und geschmacklichen Beeinträchtigung der Crema eines Kaffee-Heißgetränks, nämlich des beabsichtigten dichten Schaums, der sich auf dem Kaffee-Heißgetränk bildet. Dieser nachteilige Effekt ist auch als "Verbrennen" der Crema bekannt und kann im Extremfall dazu führen, dass neben einer unerwünschten dunklen Verfärbung kaum oder kein derartiger Schaum entsteht.

Hinzu kommt der im Rahmen der vorliegenden Erfindung entdeckte Effekt, dass bei einer Brau-Frühphase, nämlich vor dem Zeitpunkt, bei welchem erwärmtes Wasser tatsächlich durch den Getränkerohstoff fließt (also etwa durch die Kapsel-Portionsverpackung hindurchtreten kann) die Brüheinheit dem zufließenden Wasser einen Flusswiderstand entgegensetzt und so einen Gegendruck aufbaut. Wiederum nachteilige Konsequenz ist ein ungleichmäßiges Flussverhalten, was den vorstehend beschriebenen unerwünschten Temperaturanstieg im Wasser fördert.

Zwar ist es denkbar, durch eine entsprechende - komplexe - Einrichtung der Regelmittel derartige unerwünschte Temperaturschwankungen im Heißwasser zu kompensieren bzw. zu berücksichtigen, dies führt jedoch üblicherweise zu beträchtlichem zusätzlichem Realisierungsaufwand der Heißgetränk-Bereitungsvorrichtung, welche, insbesondere bei einer Ausrichtung auf private Haushalte als Endabnehmer, im Hinblick auf Herstellungskosten und einen notwendigen Hardware-Aufwand nicht beliebig aufwendig ausgestaltet werden kann.

Aus der WO 2014/114935 A1 ist eine Vorrichtung zur Bereitung eines Heißgetränks nach dem Oberbegriff des Hauptanspruchs bekannt. Zum weiteren Stand der Technik wird auf die EP 2 027 798 A1 verwiesen. Aufgabe der vorliegenden Erfindung ist es daher, eine Vorrichtung zur Bereitung eines Heißgetränks nach dem Oberbegriff des Hauptanspruchs im Hinblick auf ihre Betriebseigenschaften zu verbessern, dabei insbesondere das Entstehen von Temperaturschwankungen des der Brüheinheit zuzuführenden, erwärmten Wassers zu verhindern und so sicherzustellen, dass zu jedem Betriebszeitpunkt bzw. bei jeder Inbetriebnahme stets das Heißgetränk in konsistenter Qualität und ohne - wärmebedingte - Qualitätsbeeinträchtigung aus dem Gerät ausgetragen werden kann. Dabei ist zusätzlich sicherzustellen, dass die Bereitungsvorrichtung mit geringem Bauteile- bzw. Baugruppenaufwand realisierbar ist, so dass benötigte Komponenten- und Herstellungskosten, tauglich für eine Großserienproduktion, niedrig gehalten werden können.

Die Aufgabe wird durch die Vorrichtung zur Bereitung eines Heißgetränks mit den Merkmalen des Hauptanspruchs gelöst; vorteilhafte Weiterbildungen der Erfindung sind in Unteransprüchen beschrieben. Zusätzlich und vorteilhaft im Rahmen der Erfindung wird Schutz beansprucht für eine Verwendung einer derartigen Heißgetränk-Bereitungsvorrichtung als Portionskaffeemaschine, wobei sich insbesondere Einzelportionsverpackungen, weiter bevorzugt in Form gängiger Kapseln, als besonders bevorzugt und geeignet zur Verarbeitung durch bzw. Verwendung im Rahmen der Erfindung erwiesen haben.

In erfindungsgemäß vorteilhafter Weise sind den Pumpenmitteln Betriebssteuerungsmittel so zugeordnet, dass diese die Pumpenmittel nicht unmittelbar nach der Aktivierung mit einer Volllast-Ansteuerung belegen, vielmehr sorgen die erfindungsgemäßen Betriebssteuerungsmittel für ein verlangsamtes, graduell ansteigendes Förderverhalten der Pumpenmittel, welche günstig und bevorzugt im Rahmen der vorliegenden Erfindung als Schwinganker- bzw. Vibrationspumpe ausgestaltet sind. Vorteilhafte Konsequenz im Rahmen der Erfindung ist eine Vergleichsmäßigung der Durchströmung der Erwärmungsvorrichtung, in bevorzugter Weiterbildung realisiert als Thermoblock oder mittels eines Thermoblocks, so dass insbesondere der als nachteilig und für das erzeugte Heißgetränkeprodukt schädliche Wasser-Gegendruck durch die Brüheinheit, verbunden mit dem nachteiligen Temperatur-Überschwingen der Temperaturregelung der Erwärmungsvorrichtung, nicht, oder nur im vermindertem Maße, auftritt. Vorteilhafte Konsequenz ist eine verbesserte Qualität des erzeugten Heißgetränks, etwa sichtbar an bestmöglich hergestellter Crema.

In erfindungsgemäß vorteilhafter Weise wird dies durch die Betriebssteuerungsmittel dadurch bewirkt, dass diese nach einer Aktivierung der Bereitungsvorrichtung bis zu einem nachfolgenden Voll- bzw. Zielleistungspumpetrieb, einen von kleinen Leistungswerten kontinuierlich und/oder graduell ansteigenden Verlauf der Ansteuerleistung bzw. Ansteuerspannung für die Pumpenmittel bewirken. Dieser ist im Rahmen der Erfindung kontinuierlich ansteigend und bevorzugt im Zeitverlauf linear und/oder rampenförmig, so dass eine steuerungstechnische Umsetzung vereinfacht ist.

Dadurch, dass im Rahmen der vorliegenden Erfindung neben einem Ziel- bzw. Volllastbetrieb der Pumpenmittel nunmehr auch der Anfahrbetrieb gesteuert und dementsprechend das Pumpenverhalten während dieses Zeitraums beherrscht ist, besteht zu jedem Zeitpunkt des Betriebs Orientierung über eine tatsächlich durch die Pumpenmittel geförderte Wassermenge. Dies bewirkt die weitere, im Rahmen der Erfindung umgesetzte und vorteilhafte Konsequenz, dass auf Messmittel bzw. Detektionsmittel für einen tatsächlichen Wasserdurchfluss - vor oder nach den Pumpenmitteln entlang der Strömungsrichtung des Wassers - verzichtet werden kann. Offensichtlich sind die vorteilhaften Konsequenzen dieses Erfindungsaspekts für die angestrebte kostengünstige und großserientaugliche Fertigbarkeit der Heißgetränk-Bereitungsvorrichtung, insbesondere mit einer Zielgruppe in privaten Haushalten bzw. für den privaten Konsum.

Dabei ist es zwar bevorzugt, den vorbestimmten Anfahrtszeitraum linear ansteigend im Hinblick auf eine Pumpenleistung und/oder eine elektrische Leistungsaufnahme der Pumpenmittel auszugestalten, es kann jedoch eine andere Anstiegsform vorbestimmt sein, welche etwa progressiv im Zeitverlauf ausgestaltet ist. Wesentlich für die Realisierung der Erfindung ist lediglich, dass der erfindungsgemäße Anfahrtszeitraum, bis eine (maximale) Soll- bzw. Zielleistung der Pumpenmittel erreicht ist, länger ist als ein Anfahrbetrieb, welcher etwa durch Aufschalten einer maximalen Spannung oder Leistung unmittelbar mit dem Aktivieren erfolgen würde (wobei hier ja auch, etwa durch induktive Effekte bedingt, eine gewisse Mindestverzögerung entsteht - der Anfahrtszeitraum im Rahmen der vorliegenden Erfindung ist dagegen länger eingerichtet).

Vorgesehen ist es im Rahmen der Erfindung, den Anfahrtszeitraum in Bezug zu einer Regelzeitkonstante der Regelfunktion zu setzen, welche durch die der Erwärmungsvorrichtung zugeordneten Regelmittel eingerichtet bzw. umgesetzt ist. Dabei sieht die Erfindung vor, den Anfahrtszeitraum so zeitlich zu bemessen, dass dieser mindestens gleich, üblicherweise und bevorzugt aber länger als eine solche Regelzeitkonstante ist, bevorzugt mindestens das Zweifache, weiter bevorzugt mindestens das Vier- oder Fünffache einer derartigen Konstante beträgt. Dabei ist es wiederum bevorzugt, die Regelfunktion als PD-(proportional-differenzial) Regelung zu realisieren. In der praktischen Realisierung einer Portionskaffeemaschine als Heißgetränk-Bereitungsvorrichtung und üblichen kapselartigen Einzelportionsverpackungen für Kaffeepulver als Getränkerohstoff würde der erfindungsgemäße Anfahrtszeitraum bevorzugt mindestens 1 Sekunde betragen, wobei auch Mindest-Anfahrtszeiträume von 2, 2,5 oder mehr Sekunden als bevorzugte Realisierungsformen der Erfindung gelten.

In verfahrenstechnisch und zur Umsetzung der Betriebssteuerungsmittel besonders günstiger Weise ist weiterbildend vorgesehen, den erfindungsgemäßen, kontinuierlich ansteigenden Ansteuerleistungsverlauf durch eine Phasenanschnittssteuerung zu bewirken, welche - in ansonsten bekannter Weise - auf ein zur Energieversorgung der Pumpenmittel beschaltetes Wechselspannungs-Netzsignal wirkt und, entsprechend einer aktuellen Position im Zeitverlauf, einen entsprechend ansteigenden Abschnitt einer bevorzugt sinusförmigen, weiter bevorzugt gleichgerichteten (Halb-)Welle des Wechselspannungssignals zur Pumpenansteuerung nutzt.

Während sich die vorliegende Erfindung, insbesondere aufgrund der Beheizungseigenschaften und ihrer Verbreitung für die gängigen Heißgetränk-Bereitungsvorrichtungen, für einen Thermoblock zur Realisierung der Erwärmungsvorrichtung eignet, insoweit eine diesbezügliche Weiterbildung der Erfindung als bevorzugt beansprucht wird, ist es gleichwohl von der Erfindung umfasst, auch andere, in der eingangs beschriebenen Weise einen thermischen Regel-Überschwingungs-Verlauf erzeugende Konfigurationen der Beheizungsmittel vorzusehen. Gleichermaßen ist es zwar von der Erfindung umfasst, eine Widerstands-Heizvorrichtung, weiter bevorzugt in Verbindung mit einem Thermoblock, zur bevorzugten Realisierung der Erwärmungsvorrichtung vorzusehen, allerdings können auch im Hinblick auf das Beheizungselement, welches zudem weiter bevorzugt als Thermistor mit negativem Temperatur-Koeffizient (NTC) realisiert sein kann, andere Ausgestaltungen der Wärmeerzeugung gewählt werden. Wiederum unter dem Gesichtspunkt einer kostengünstigen Herstellung und Tauglichkeit der Vorrichtung für eine Großserienfertigung ist es weiterbildungsgemäß vorgesehen und bevorzugt, die Betriebssteuerungsmittel durch eine Mikrocontroller- und/oder Mikroprozessoreinheit zu realisieren, welche üblicherweise ohnehin für die erfindungsgemäßen Regelmittel verwendet wird. Dies führt dann dazu, dass unter synergistischer Nutzung derselben Hardware-Komponenten dann die erfindungsgemäße zusätzliche Funktionalität der Ansteuerung der Pumpenmittel über den erfindungsgemäßen Anfahrtszeitraum realisiert sein kann, in der bevorzugten Weiterbildung durch eine einfache zusätzliche Software-Routine bzw. weitere, üblicherweise ohnehin vorhandene Steuerausgänge einer solchen (gemeinsamen) Mikrocontroller- bzw. Mikroprozessoreinheit, ggf. zusätzlich ergänzt durch geeignete Treiberschaltungs-Infrastruktur.

In der zusätzlichen Weiterbildung würde sich eine derartige Mikrocontroller- bzw. Mikroprozessoreinheit dann auch eignen, eine zusätzliche vorteilhafte Funktionalität zu realisieren, nämlich mittels der weiterbildungsgemäß vorgesehenen Netzspannungsdetektormittel ein Detektorsignal zu verarbeiten, welches einen aktuellen Wert der anliegenden Netzspannung wiedergibt bzw. einem solchen aktuellen Wert proportional ist. Diese vorteilhafte Weiterbildung der Erfindung gestattet es dann, als Reaktion auf dieses Detektorsignal und unter Ausbildung eines Spannungs-Differenzsignals zu einem Spannungs-Sollwert bzw. Spannungs-Normwert einer (Netz-)Betriebsspannung für die Erwärmungsvorrichtung nachteilige Effekte auszuregeln bzw. auszugleichen, welche sich aus einem (gegenüber dem Sollwert) zu hohen bzw. zu niedrigen aktuellen Spannungswert ergeben. Auch hier können nämlich derartige Spannungsabweichungen mit ihrem entsprechenden - quadratischen - Einfluss auf die Heizleistung zu unerwünschten Temperaturänderungen der Erwärmungsvorrichtung bzw. des darin erwärmten Wassers führen, mit den zu vermeidenden nachteiligen Konsequenzen für die Qualität des erzeugten Heißgetränks. Die entsprechende Weiterbildung würde daher, als Reaktion auf das Detektorsignal und insbesondere die vom Sollwert abweichende Netzspannungsdifferenz bei Netzspannungsschwankungen die Temperaturregelung der Regelmittel so beeinflussen, dass ein entsprechender Temperaturausgleich zeitnah stattfindet, mithin also netzspannungsbedingte Temperaturvariationen wirksam kompensiert werden können.

Während die im Rahmen der Erfindung verwendeten Pumpenmittel in besonders bevorzugter Weise als Schwinganker bzw. Vibrationspumpe realisiert sind, was insbesondere unter dem Gesichtspunkt einer Wasserdosierung in Abhängigkeit von einem - kontrollierten - Pumpenbetrieb günstig ist, ist es gleichwohl von der Erfindung auch umfasst, andere geeignete Pumpentechnologien für die Realisierung der erfindungsgemäßen Pumpenmittel vorzusehen.

Im Ergebnis ermöglicht es die vorliegende Erfindung, in herstellungstechnisch und im Hinblick auf einen erforderlichen Hardware-Aufwand günstiger Weise, gleichwohl mit leistungsfähigen Betriebseigenschaften und deutlichen Qualitätsverbesserungen bezogen auf das Endprodukt, eine Heißgetränk-Bereitungsvorrichtung zu schaffen, welche zwar in besonders bevorzugter Weise als Portionskaffeemaschine, und hier insbesondere zur Verarbeitung von kapselartigen Einzelportionsverpackungen, geeignet ist, gleichwohl ist auch die vorliegende Erfindung nicht auf diese bevorzugte Verwendungsform beschränkt.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:

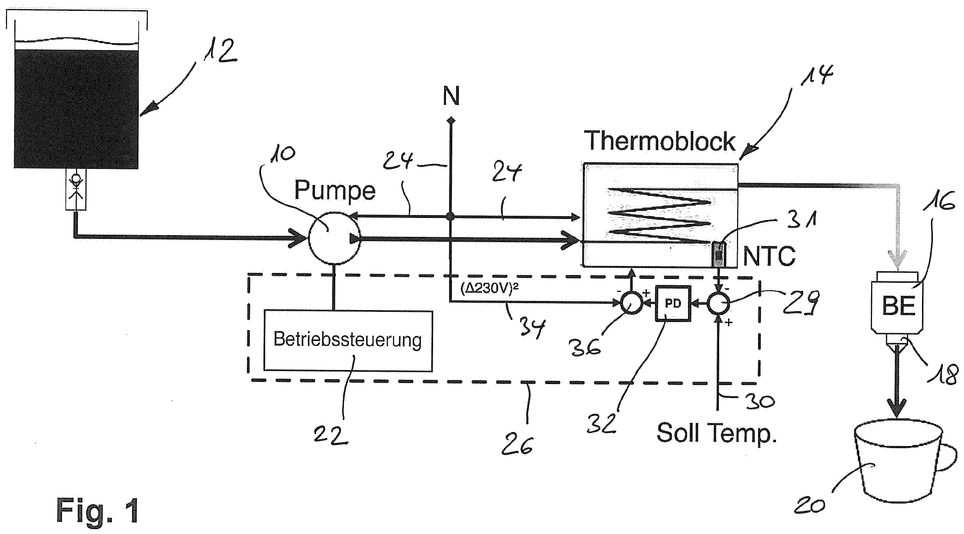

- Fig. 1: ein schematisches Blockschaltbild der Heißgetränk-Zubereitungsvorrichtung gemäß einem ersten bevorzugten Ausführungsbeispiel der Erfindung.

Eine als Schwingankerpumpe 10 ausgestaltete Pumpeneinheit in einem in der Figur nicht gezeigten Gehäuse der Heißgetränk-Zubereitungsvorrichtung fördert Frischwasser aus einem gleichermaßen im oder am Gehäuse vorgesehenen Frischwassertank 12 und bringt dies zu einer als Thermoblock 14 ausgestalteten Erwärmungsvorrichtung (Heizeinheit), aus welcher dann das in ansonsten bekannter Weise erwärmte Wasser in eine Brüheinheit 16 gelangt, welche - wiederum in ansonsten bekannter Weise - zur Aufnahme und Verarbeitung von Kapseln als Portionsverpackungen für Getränkerohstoffe, hier Kaffeemehl, ausgebildet und vorgesehen ist. Aus einem der Brüheinheit 16 nachgeschalteten Auslass 18 tritt dann der fertig gebrühte Kaffee zum Konsum in einen geeignet vorgesehenen Behälter 20 aus. Im Blockschaltbild der Fig. 1 symbolisieren die die Einheiten 12, 10, 14, 16, 20 verbindenden, fett dargestellten Pfeile den Wasserfluss in Strömungsrichtung, von (noch unerwärmtem) Frischwasser bis zum fertigen Heißgetränk.

Den Pumpenmitteln 10 ist eine schematisch als Funktionsblock 22 dargestellte Betriebssteuerungseinheit vorgeschaltet, welche insbesondere eine Steuerung bzw. Veränderung der aus einem Netzspannungsanschluss N des Gehäuses über Netzspannungsleitungen 24 (dünn gezeichnete Pfeile) anliegender Netzspannung vornimmt. Konkret ist die Betriebssteuerung 22 Teil einer mittels einer Mikrocontrollereinheit realisierten und durch die gestrichelte Umrandung 26 symbolisierten zentralen elektronischen Verarbeitungseinheit im Gehäuse, welche, geeignet programmiert bzw. mit geeigneten ein- und ausgehenden Schnittstellen und ggf. elektronischer Treiberinfrastruktur versehen, Steuer- und Regelfunktionalitäten für die Pumpenmittel 10, ebenso wie für die Thermoblock-Heizeinheit 14, vornehmen kann.

So bewirkt etwa die durch die Mikrocontrollereinheit 26 realisierte Betriebssteuerungseinheit 22, dass bei einem Aktivieren der Getränkebereitungsvorrichtung - typischerweise mittels Betätigung durch eine Bedienperson eines am oder im Gehäuse vorgesehenen Schalters oder dergleichen Bedieneinheit - die die Pumpenmittel 10 realisierende Schwingankerpumpe über einen rampenförmigen Anfahrtszeitraum von ca. 2 bis 3 Sekunden, beginnend mit dem Einschalten und bis zu einem Soll- bzw. Volllastbetrieb im Leistungs-Zeitdiagramm, angesteuert wird. Die Rampenform wird durch eine (ansonsten als bekannt vorauszusetzende) Phasenanschnittssteuerung des Netzspannungssignals realisiert, welches an den Pumpenmitteln 10 zu deren Spannungsversorgung anliegt und welches zur Realisierung des bevorzugt rampenförmig-linearen Anstiegs kontinuierlich in der Anschnittphase verändert wird.

Vorteilhafte Wirkung dieser im Rahmen des erfindungsgemäßen Ausführungsbeispiels realisierten Anfahrtsphase (Anfahrtszeitraums) ist, dass der in Wasserflussrichtung nachgeschalteten Thermoblock-Heizeinheit 14 zum Zeitpunkt der Geräteaktivierung keine sprunghaft große, einem Volllastbetrieb der Pumpe entsprechende Wassermenge zufließt, vielmehr diese in den Thermoblock 14 eintretende Wassermenge graduell und kontinuierlich ansteigend von einem niedrigen Wert ist. Vorteilhafte Wirkung ist, dass eine wiederum mittels der Mikrocontrollereinheit 26 realisierte, eine Beheizungstemperatur der Erwärmungsvorrichtung 14 auf eine Solltemperatur 30 regelnde Regelungseinheit 32 genug Zeit hat, um als Reaktion auf das eintretende kalte Wasser eine thermisch überschwungsfreie (oder zumindest überschwungsarme) Regelung durchzuführen, wiederum mit der vorteilhaften Wirkung, dass die vom Thermoblock 14 auf durchströmendes gebrachte Erwärmung keine (regelungsbedingten) Temperaturschwankungen zeigt. Dies ist dann Voraussetzung für einen qualitativ hochwertigen Braubetrieb in der Brüheinheit 16, wobei insbesondere auf diese Weise sichergestellt ist, dass Qualitätskriterien wie etwa eine farblich und geschmacklich einwandfreie Crema, zu jedem Betriebszeitpunkt, auch schon während eines Zeitraums unmittelbar nach dem Einschalten und eines Regelungsbetriebs der Regelung 32, sichergestellt sind. Schematisch durch einen Regelverstärker 29 bzw. einen Thermosensor 31 (NTC) realisiert, erfolgt die Temperaturregelung entsprechend einer PD-Regelungsfunktion, wobei dies als rein exemplarisch, gleichwohl bevorzugt, zu verstehen ist.

Zweiter vorteilhafter Effekt dieser erfindungsgemäßen Ansteuerung der Pumpenmittel 10 durch die Betriebssteuerungseinheit 22 ist der Umstand, dass über den gesamten Betriebszeitraum der Pumpenmittel deren Betriebsparameter (und damit insbesondere auch der Wasserdurchfluss) erfasst und beherrscht sind. Vorteilhaft bringt dies die Konsequenz, dass die Vorrichtung, außerhalb der Pumpenmittel 10, keine gesonderten Durchfluss- und/oder Wassermengendetektoren aufweist, was sich gerade vor dem Hintergrund einer Eignung der vorliegenden Technologie für preisgünstig herstellbare Massenprodukte als vorteilhaft erweist, da auf diese Weise eine zusätzlich Baugruppe entfallen kann.

Das Blockschaltbild der Fig. 1 verdeutlicht eine zusätzliche, vorteilhafte Eigenschaft der Erfindung, nämlich die Möglichkeit, auf eine Höhe der Netzspannung N (bzw. eine Änderung dieser Netzspannung) durch Anpassung der Temperaturregelung des Thermoblocks 14 reagieren zu können. Genauer gesagt liegt über eine Spannungsdetektorleitung 34 ein Momentanwert der Netzspannung an einer schematisch als Differenzverstärker 36 gezeichneten Reglerkomponente an, so dass ein Einfluss der Netzspannung, insbesondere eine (positive oder negative) Abweichung der Netzspannung von einem üblichen NetzspannungsSollwert, etwa 230V, im Rahmen der Temperaturregelung berücksichtigt und ausgeregelt werden kann. Da sich nämlich Spannungsschwankungen, damit Differenzen zu einem Spannungs-Sollwert, quadratisch im Hinblick auf die elektrische Heizleistung im Thermoblock 14 auswirken, besaßen bekannte, nicht im Hinblick auf Netzspannungsschwankungen kompensierte elektrische Heizvorrichtungen das Problem, dass etwa bei einer erhöhten Netzspannung sich diese in unterwünscht hoher Beheizungstemperatur des Thermoblocks niederschlug, welche dann, ggf. erst wiederum mit der Regelverzögerung ausgeregelt werden musste.

Eine unmittelbare Spannungserfassung, wie mittels der Detektoreinheit 34 - etwa in der Praxis realisiert durch einen ohnehin vorhandenen A/D Eingang der Mikrocontrollereinheit 26, ggf. unterstützt durch ein vorgeschaltetes Anpassungsnetzwerk - ermöglicht es nunmehr, bereits unmittelbar diese Spannungsschwankungen im Rahmen der Temperaturregelung zu berücksichtigen und so, wiederum vorteilhaft und analog zur vorstehend erläuterten Funktionalität bei unerwünschten Überschwingern, das Erwärmungsverhalten des Thermoblocks in jedem Betriebszustand, also insbesondere auch bei Spannungsschwankungen, zu vergleichmäßigen.

Im Extremfall lässt sich die gezeigte Kompensation sogar benutzen, um eine - damit automatische - Anpassung an völlig andere Netzspannungsumgebungen, wie etwa eine 110V Umgebung, zu realisieren.

Im Ergebnis entsteht durch die vorliegende Erfindung in hardwaretechnisch äußerst einfacher, dabei leicht zu montierender und betriebssicherer Weise eine Heißgetränk-Bereitungsvorrichtung, welche erhöhte Qualität in Erwärmung und Bereitung des Heißgetränks mit konstruktiver Eleganz kombiniert. Dabei ist die Verwendung als Kaffeemaschine zur Verarbeitung von kapselartigen Portionsverpackungen bevorzugt, diese Verwendung beschränkt jedoch nicht das deutlich größere, universelle Einsatzspektrum der vorliegenden Erfindung.

## Patentansprüche

1. Vorrichtung zur Bereitung eines Heißgetränks mit einer in einem Gehäuse vorgesehenen, elektrisch betriebenen Erwärmungsvorrichtung (14) für aus einem Frischwasseranschluss des Gehäuses oder einem im Gehäuse vorgesehenen Wassertank (12) mittels elektrisch betriebener Pumpenmittel (10) herangeführtes Wasser
und einer der Erwärmungsvorrichtung nachgeordneten Brüheinheit (16), in welcher erwärmtes Wasser mit einem Getränkerohstoff zusammengeführt und über Auslassmittel (18) aus dem Gehäuse ausgetragen werden kann,
wobei der Erwärmungsvorrichtung Regelmittel (29, 32, 36) zum Regeln eines Wasserkontaktbereichs und/oder einer Wassertemperatur des erwärmten Wassers auf mindestens einen Temperatur-sollwert (30) zugeordnet sind,
wobei einem für das elektrische Betreiben der Erwärmungsvorrichtung beschalteten Netzspannungsanschluss (N) der Bereitungsvorrichtung Netzspannungsdetektormittel (34) zugeordnet sind, **dadurch gekennzeichnet,**
**dass** zwischen dem Wassertank und der Erwärmungsvorrichtung, insbesondere zwischen dem Wassertank und den Pumpenmitteln, keine Mittel zur Messung und/oder Detektion eines Wasserdurchflusses und/oder einer herangeführten Wassermenge vorgesehen sind
und den Pumpenmitteln Betriebssteuerungsmittel (22) so zugeordnet sind, dass als Reaktion auf eine bevorzugt über eine manuell betätigbare Bedieneinheit am Gehäuse erfolgte Aktivierung der Bereitungsvorrichtung zur Herstellung einer Portion des Heißgetränks eine elektrische Ansteuerung der Pumpenmittel zu deren Aktivierung und bis zu einem nachfolgenden Zielleistungspumpbetrieb mit einem Ansteuerspannungs- und/oder Ansteuerleistungsverlauf erfolgt, der über einen vorbestimmten Anfahrtszeitraum kontinuierlich ansteigend und insbesondere im Zeitverlauf linear und/oder rampenförmig eingerichtet ist,
wobei die Netzspannungsdetektormittel (34) so zugeordnet sind, dass als Reaktion auf ein von einer aktuell erfassten Netzspannung abhängiges Detektorsignal eine elektronische Beeinflussung einer Regelfunktionalität der Regelmittel, insbesondere eine Berücksichtigung oder Kompensation eines elektrischen Leistungsbeitrags einer von einem Netzspannungssollwert abweichenden Netzspannungsdifferenz auf die Erwärmungsvorrichtung, erfolgen kann, wobei der Anfahrtszeitraum gleich oder länger als eine Regelzeitkonstante einer durch die Regelmittel realisierten Regelfunktion ist.

2. Vorrichtung nach Anspruch 1,
**dadurch gekennzeichnet,**
**dass** der Anfahrtszeitraum mindestens das Zweifache, weiter bevorzugt mindestens das Vierfache, der Regelzeitkonstante beträgt.

3. Vorrichtung nach Anspruch 1 oder 2,
**dadurch gekennzeichnet,**
**dass** eine durch die Regelmittel realisierte Regelfunktion eine PD-Regelung ist.

4. Vorrichtung nach einem der Ansprüche 1 bis 3,
**dadurch gekennzeichnet,**
**dass** der Anfahrtszeitraum mindestens eine Sekunde, bevorzugt mindestens zwei Sekunden, bei einer Ausgestaltung der Bereitungsvorrichtung zur Verarbeitung von in Einzel- oder Mehrportionsverpackungen, insbesondere Kapseln, portioniertem Kaffeemehl als Getränkerohstoff beträgt.

5. Vorrichtung nach einem der Ansprüche 1 bis 4,
**dadurch gekennzeichnet,**
**dass** der kontinuierlich ansteigende Ansteuerleistungsverlauf durch eine von den Betriebssteuerungsmitteln realisierte Phasenanschnittssteuerung eines zur Energieversorgung der Pumpenmittel beschalteten Wechselspannungssignals bewirkt wird.

6. Vorrichtung nach einem der Ansprüche 1 bis 5,
**dadurch gekennzeichnet,**
**dass** die Erwärmungsvorrichtung einen Thermoblock (14) aufweist oder durch einen solchen realisiert ist.

7. Vorrichtung nach einem der Ansprüche 1 bis 6,
**dadurch gekennzeichnet,**
**dass** die Erwärmungsvorrichtung mit Wärmedetektormitteln (31), insbesondere mit einem einen negativen Temperaturkoeffizienten aufweisenden Thermistor, realisiert ist.

8. Vorrichtung nach einem der Ansprüche 1 bis 7,
**dadurch gekennzeichnet,**
**dass** die Betriebssteuerungsmittel durch eine zur Realisierung der Regelmittel vorgesehene Mikrocontroller- oder Mikroprozessoreinheit (26) realisiert sind.

9. Vorrichtung nach einem der Ansprüche 1 bis 8, **dadurch gekennzeichnet, dass** die Pumpenmittel (10) als Schwingankerpumpe und/oder Vibrationspumpe realisiert sind.

10. Verwendung der Bereitungsvorrichtung nach einem der Ansprüche 1 bis 9 als Portionskaffeemaschine, insbesondere für den Heim- oder Privatgebrauch.

## Claims

1. A device for preparing a hot beverage comprising an electrically operated heating device (14) provided in a housing and serving to heat water supplied from a clean-water connection of the housing or from a water tank (12) provided in the housing by means of electrically operated pump means (10)
and a brewing unit (16) which is disposed downstream of the heating device and in which heated water can be blended with a beverage raw material and be discharged from the housing via outlet means (18), the heating device being assigned control means (29, 32, 36) for controlling a water contact area and/or a water temperature of the heated water to at least one target temperature (30),
mains voltage detector means (34) being assigned to a mains voltage connection (N) of the preparation device, said mains voltage connection (N) being connected for the electrical operation of the heating device,
**characterized in that**
no means for the measurement and/or detection of a water flow rate and/or a supplied amount of water are provided between the water tank and the heating device, in particular between the water tank and the pumping means,
and **in that** operation control means (22) are assigned to the pumping means in such a manner that in response to an activation of the preparation device for producing a serving of the hot beverage, said activation preferably being carried out via a manually operable operating unit on the housing, the pumping means are electrically actuated for their activation and operated at a drive voltage curve and/or a drive power curve which is set up so as to continuously rise for a predetermined starting period and is in particular linear and/or ramp-shaped over time until a subsequent target power pumping operation is reached,
the mains voltage detector means (34) being assigned in such a manner that in response to a detector signal which depends on a currently detected mains voltage, a control functionality of the control means can be electronically influenced, in particular an electrical power contribution of a mains voltage difference that deviates from a target mains voltage to the heating device can be considered or compensated, the starting period being equal to or longer than a control time constant of a control function realized by the control means.

2. The device according to claim 1
**characterized in that**
the starting period is at least double, more preferably at least quadruple, the control time constant.

3. The device according to claims 1 or 2,
**characterized in that**
a control function realized by the control means is a PD-control.

4. The device according to one of the claims 1 to 3,
**characterized in that**
the starting period is at least one second, preferably at least two seconds, in an embodiment of the preparation device for processing ground coffee as a beverage raw material, which is portioned in individual or multi-portion packages, in particular capsules.

5. The device according to one of the claims 1 to 4,
**characterized in that**
the continuously rising drive power curve is caused by a phase angle control of an AC signal which is connected for supplying energy to the pumping means, said phase angle control being realized by the operation control means.

6. The device according to one of the claims 1 to 5,
**characterized in that**
the heating device has or is realized by a thermoblock (14).

7. The device according to one of the claims 1 to 6,
**characterized in that**
the heating device is realized with heat detector means (31), in particular with a thermistor having a negative temperature coefficient.

8. The device according to one of the claims 1 to 7,
**characterized in that**
the operation control means are realized by a microcontroller unit or microprocessor unit (26) provided for realizing the control means.

9. The device according to one of the claims 1 to 8,
**characterized in that**
the pumping means (10) are realized as a vibration armature pump and/or a vibration pump.

10. A use of the preparation device according to one of the claims 1 to 9 as a portion coffee machine, in particular for home or private use.

## Revendications

1. Dispositif pour la préparation d'une boisson chaude comprenant un dispositif de chauffage (14) actionné électriquement, prévu dans un boîtier et servant à chauffer de l'eau fournie à partir d'un raccordement en eau propre du boîtier ou à partir d'un réservoir d'eau (12), qui est prévu dans le boîtier, au moyen des moyens de pompage (10) actionnés électriquement
et une unité d'infusion (16) qui est disposée en aval du dispositif de chauffage et dans laquelle de l'eau chauffée peut être mélangée avec une matière première de boisson et peut être déchargée du boîtier par des moyens de sortie (18),
des moyens de réglage (29, 32, 36) pour régler une zone de contact d'eau et/ou une température de l'eau chauffée à au moins une température souhaitée (30) étant assignés au dispositif de chauffage, des moyens de détection de tension de réseau (34) étant assignés à un raccordement de tension de réseau (N) du dispositif de préparation, ledit raccordement de tension de réseau (N) étant connecté pour le fonctionnement électrique du dispositif de chauffage,
**caractérisé en ce qu'**
aucun moyen pour mesurer et/ou détecter un débit d'eau et/ou une quantité d'eau fournie n'est prévu entre le réservoir d'eau et le dispositif de chauffage, notamment entre le réservoir d'eau et les moyens de pompage,
et **en ce que** des moyens de commande de fonctionnement (22) sont assignés aux moyens de pompage de telle sorte qu'en réponse à une activation du dispositif de préparation pour la production d'une portion de la boisson chaude, ladite activation étant effectuée de préférence par une unité de commande actionnable manuellement sur le boîtier, les moyens de pompage sont actionnés électriquement pour leur activation à une courbe de tension de commande et/ou une courbe de puissance de commande qui est configurée de telle manière qu'elle monte continuellement pendant une période de démarrage prédéterminé et notamment linéaire et/ou en forme de rampe au fil du temps jusqu'à ce que un fonctionnement de pompage suivant à puissance cible est atteinte,
les moyens de détection de tension de réseau (34) étant assignés de telle sorte qu'en réponse à un signal de détection dépendant d'une tension de réseau actuellement détectée, une fonctionnalité de réglage des moyens de réglage peut être influencé électroniquement, notamment une contribution de puissance électrique d'une différence de tension de réseau déviante d'une tension de réseau souhaitée au dispositif de chauffage peut être considérée ou compensée,
la période de démarrage étant égal à ou plus long qu'une constante de temps de réglage d'une fonction de réglage réalisée par les moyens de réglage.

2. Dispositif selon la revendication 1,
**caractérisé en ce que**
la période de démarrage est au moins le double, plus préférablement au moins le quadruple, de la constante de temps de réglage.

3. Dispositif selon la revendication 1 ou 2,
**caractérisé en ce qu'**
une fonction de réglage réalisée par les moyens de réglage est un réglage PD.

4. Dispositif selon l'une quelconque des revendications 1 à 3,
**caractérisé en ce que**
la période de démarrage est au moins une seconde, de préférence au moins deux secondes, quand le dispositif de préparation est configuré pour traiter du café moulu comme matière première de boisson divisé en portions dans des emballages des portions individuelles ou multiples, notamment des capsules.

5. Dispositif selon l'une quelconque des revendications 1 à 4,
**caractérisé en ce que**
la courbe de puissance de commande qui monte continuellement est provoquée par une commande par angle de phase d'un signal de tension alternative connecté pour fournir de l'énergie aux moyens de pompage, ladite commande par angle de phase étant réalisée par les moyens de commande de fonctionnement.

6. Dispositif selon l'une quelconque des revendications 1 à 5,
**caractérisé en ce que**
le dispositif de chauffage a ou est réalisé par un bloc thermique (14).

7. Dispositif selon l'une quelconque des revendications 1 à 6,
**caractérisé en ce que**
le dispositif de chauffage est réalisé avec des moyens de détection de chaleur (31), notamment avec une thermistance qui a un coefficient de température négatif.

8. Dispositif selon l'une quelconque des revendications 1 à 7,
**caractérisé en ce que**
les moyens de commande de fonctionnement sont réalisés par une unité de microcontrôleur ou une unité de microprocesseur (26) prévue pour réaliser les moyens de réglage.

9. Dispositif selon l'une quelconque des revendications 1 à 8,
**caractérisé en ce que**
les moyens de pompage (10) sont réalisés comme pompe à armature oscillante et/ou pompe vibrante.

10. Utilisation du dispositif de préparation selon l'une quelconque des revendications 1 à 9 en tant que cafetière à dosettes, notamment pour l'usage domestique ou privé.
